# EUROPEAN PATENT SPECIFICATION

(11) **EP 0 404 324 B1**
(45) Date of publication and mention of the grant of the patent: **26.10.1994**
(21) Application number: 90305096.1
(22) Date of filing: 11.05.1990
(51) Int. Cl.: C07F 7/18, C08G 77/38

(54) **Acrylamidoaryloxy functional silicon compounds**
Acrylamidoaryloxifuntionelle Siliciumverbindungen
Composés de cilicium à fonction acrylamidoaryloxy

(30) Priority: 19.06.1989 US 367574
(43) Date of publication of application: 27.12.1990
(73) Proprietor: DOW CORNING CORPORATION, Midland Michigan 48686-0994 (US)
(72) Inventor: Decker, Gary Thomas, Midland, Michigan (US); Lee, Chi-Long, Midland, Michigan (US); Gornowicz, Gerald Alphonse, Midland, Michigan (US)
(74) Representative: Dowden, Marina

(56) References cited:
- EP-A- 0 273 565
- US-A- 4 608 270

## Description

It is an objective of the present to provide acrylamidoaryloxy functional silicon compounds which can be cured by exposure to ultraviolet radiation.

The present invention relates to an acrylamidoaryloxy or methacrylamidoaryloxy functional silicon compound comprising at least one acrylamidoaryloxy group or methacrylamidoaryloxy group bonded to at least one silicon atom and any remaining groups attached to the silicon atoms of the compound being selected from the group consisting of monovalent hydrocarbon radical halogenated monovalent hydrocarbon radical and divalent oxygen bonding at least two silicon atoms together.

The present invention also relates to a method of making an acrylamidoaryloxy functional silicon compound comprising reacting in the presence of an organic solvent, a silicon compound having at least one silicon bonded hydrolyzable group which is reactable with phenol hydroxyl groups to provide a compound HX with a boiling point less than aminophenol and an aminophenol, when the hydrolyzable group is chlorine or acetoxy there is also present a tertiary amine, to produce an aminoaryloxy functional silicon compound solution, mixing the aminoaryloxy functional silicon compound with organic solvent, a tertiary amine and a chloride selected from the group consisting of acrylyl chloride and methacrylyl chloride where the chloride is present in an amount equivalent to at least the amount of amino hydrogen, removing by-produced hydrochloride salt of tertiary amine to produce a solution of the acrylamidoaryloxy functional silicon compound in an organic solvent.

The acrylamidoaryloxy or methacrylamidoaryloxy functional silicon compounds of the present invention can be prepared by reacting an acrylyl chloride or an methacrylyl chloride with aminophenoxy functional silicon compounds. The aminophenoxy functional silicon compounds can be either silanes or organosiloxanes. The silanes are those which have at least one aminophenoxy functional group per molecule. The other bonds of the silicon atom of the silane are satisfied by monovalent hydrocarbon groups or halogenated monovalent hydrocarbon groups. The aminophenoxy functional organosiloxanes are those which have at least two aminophenoxy functional groups per molecule. In addition to the aminophenoxy functional groups on the silicon atoms of the organosiloxane, the silicon atoms can have monovalent hydrocarbon groups, halogenated monovalent hydrocarbon groups and divalent oxygen atoms linking at least two silicon atoms together.

The reaction is carried out at room temperature in an organic solvent for the reactants, such as toluene and tetrahydrofuran. The aminoaryloxy functional polyorganosiloxanes have at least two aminoaryloxy groups attached to silicon atoms through an SiOC linkage and the siloxane units can be organosilsequioxane units, diorganosiloxane units, triorganosiloxy units and SiO₂ units. The organic groups bonded to the silicon atoms of the siloxane units can be monovalent hydrocarbon radicals such as methyl, ethyl, hexyl, cyclohexyl and phenyl and halogenated monovalent hydrocarbon radicals such as 3,3,3-trifluoropropyl, perfluorobutyl and chlorobenzyl. The preferred organic group bonded to silicon atoms of the siloxane other than the acrylamidoaryloxy or methacrylamidoaryloxy groups is methyl. Preferably, the aminoaryloxy functional polyorganosiloxane is an aminoaryloxy endblocked polydiorganosiloxane. These polydiorganosiloxanes have two aminophenoxy functional groups per molecule and there is from 5 to 50 siloxane units per molecule, preferably from 10 to 25 units per molecule. The aminophenoxy groups are preferably derived from 1,3-phenyl or 1,4-phenyl. The preferred acrylamidoaryloxy group or methacrylamidoaryloxy group has a formula 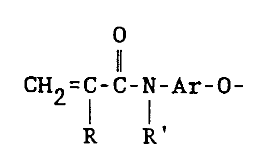
in which Ar is 1,3-phenyl or 1,4-phenyl, R is an hydrogen atom or methyl and R′ is an hydrogen atom or alkyl radical. The preferred siloxane polymer of the present invention has the formula 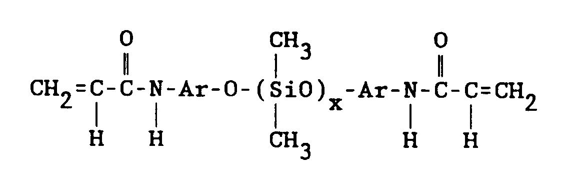
in which x has a value of from 5 to 50.

The acrylamidoaryloxy functional silanes can be prepared by the same method as described for the organosiloxanes except that aminophenoxy functional silanes are substituted for the aminofunctional organosiloxanes.

The aminophenoxy functional polyorganosiloxane can be prepared by reacting an aminophenol with a polyorganosiloxane having at least two silicon bonded hydrolyzable groups which are reactable with phenol hydroxyl groups to provide a compound HX with a boiling point at atmospheric pressure of less than aminophenol. The hydrolyzable groups, -X, can be chlorine, dimethylamino, diethylamino, methylethylketoximo, N-methyl-acetamido, acetoxy, methoxy and ethoxy. Although methoxy and ethoxy may be used, they are not preferred because these groups react too slowly in this reaction, especially for making the endblocked polydiorganosiloxane. Chlorine is the preferred group. The amounts of aminophenol are reacted with the hydrolyzable groups such that there is about one mole of aminophenol per mole of hydrolyzable group. The HX by-products result from the hydrolyzable group combining with a hydrogen from the phenol hydroxyl group. The HX can be, for example, hydrogen chloride, dimethylamine, methylethylketoxime, methanol and the like. The HX has a boiling point less than aminophenol.

The aminophenol and the polyorganosiloxane with the hydrolyzable groups are reacted in an organic solvent and in the presence of tertiary amine, such as triethylamine, if needed. The tertiary amine is needed when the hydrolyzable group is chlorine or another acidic group which is to be removed from the reaction mixture by filtration of a salt of the tertiary amine and the HX formed from the reaction as a by-product. Preferably, the amounts of the aminophenol and the polyorganosiloxane are such that the phenol hydroxyl group and the hydrolyzable group are present in equivalent amounts. The organic solvent can be, for example, tetrahydrofuran. Preferably, when the polyorganosiloxane is chlorine functional, the aminophenol, the organic solvent and the tertiary amine are combined and heated to reflux at which time the chlorine functional polyorganosiloxane is slowly added. The preferred chlorine functional polyorganosiloxane has the formula 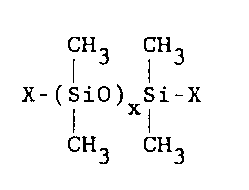
where X is chlorine atom and x has a value of from 5 to 50. An exothermic reaction takes place at this point and the heat is turned off until all the chlorine polyorganosiloxane is added. The resulting reaction mixture is then heated to reflux to complete the reaction which may take about an hour, then the mixture is cooled to about 35 to 40°C. and filtered to remove the hydrochloride salt of the tertiary amine. When other functional polyorganosiloxanes are used, a salt may not be formed because the tertiary amine may not be required, such as when the hydrolyzable group is dimethylamino or diethylamino. HX compounds, such as dimethylamine or diethylamine will volatilize from the reaction mixture and a tertiary amine is not necessary. The aminophenol is a primary or secondary amine where the amine is bonded directly to the phenol ring through a nitrogen-carbon bond, for example, m-aminophenol or p-aminophenol. An example of a secondary aminophenol is p-(N-methylamino)phenol. The various polyorganosiloxanes having hydrolyzable groups are known in the art and can be prepared by known methods.

The aminophenoxy functional silanes can be prepared by the same method as described above for the preparation of the aminophenoxy functional organosiloxanes except that the silicon compound with the hydrolyzable group is a silane such as a chlorosilane is used in place of the organosiloxanes having silicon bonded hydrolyzable groups. Preferred silanes are the chlorosilanes, such as trimethylchlorosilane.

The method of preparing the acrylamidoaryloxy or methacrylamidoaryloxy functional silicon compounds of the present invention is less expensive than the preparation of acrylamido or methacrylamido functional polymers prepared from aminoalkyl endblocked polydimethylsiloxane (as e.g. in US-A-4,608,270 and EP-A-273 565) because the raw materials are readily available and do not require the investment of substantial capital for their preparation.

The acrylamidoaryloxy functional silicon compounds of the present invention are curable upon exposure to ultraviolet radiation and are useful as a coating, such as a protective coating or release coating. The cured products from the silanes are harder than those from the organosiloxane. The silicon compounds can be cured by exposing them and a photoinitiator to ultraviolet radiation or these silicon compounds can be combined with ingredients selected from photoinitiator, photosensitizer, other acrylamidosiloxane functional polymers, acrylic monomers and polymers, methacrylic monomers and polymers and other ingredients useful for ultraviolet radiation curing acrylic or methacrylic materials. The acrylamidophenoxy functional silane and organosiloxanes of this invention can also be cured by free radical generating catalysts such as azo compounds and peroxides.

The following example is presented for illustrative purposes and should not be construed as limiting the present invention which is properly delineated in the claims.

### Example 1

A chlorine endblocked polydimethylsiloxane precursor (A) was prepared as follows:
A mixture of 1,000 g. (13.5 moles) of polydimethylcyclosiloxane having from 3 to 5 dimethylsiloxane units per molecule, 387 g. (3 moles) of dimethyldichlorosilane and 1.4 g. (0.1 weight percent based on the weight of the mixture) of perfluoromethane sulfonic acid was heated at 90°C. for 24 hours. A gas chromatograph of the resulting mixture showed no reaction had occurred. Two grams of an acid clay was added to the mixture which was then heated overnight at 90°C. A gas chromatograph of this resulting mixture showed that most of the dimethyldichlorosilane had reacted and numerous higher boiling compounds had formed. The reaction was further heated for two hours at 120°C. and a gas chromatograph showed no drastic changes in the composition compared to the previous reaction mixture. The reacted mixture was cooled and the catalyst was removed by filtration. The resulting chlorine endblocked polydimethyl-siloxane had a chlorine neutral equivalent of 392 with an average of 9.6 dimethylsiloxane units per molecule (chlorine endblocked polydimethylsiloxane A). Using a similar method a chlorine endblocked polydimethylsiloxane was obtained with a chlorine equivalent of 765 with an average of 19.7 dimethylsiloxane units per molecule (chlorine endblocked polydimethylsiloxane B).

An aminophenoxy endblocked polydimethylsiloxane (B) was prepared as follows:
A 1-liter, three-necked flask equipped with an air stirrer, reflux condenser and addition funnel was charged with 27.8 g. (0.255 mole) of either p-aminophenol or m-aminophenol, 130 g. (1.3 mole) of triethylamine and 350 ml of tetrahydrofuran. This mixture was heated to reflux and then 100 g. (0.255 equivalent, 392 chlorine equivalent weight) of chlorine endblocked polydimethylsiloxane A was added dropwise to the flask mixture. An exothermic reaction occurred and a white solid formed. The heat was turned off until all the chlorine endblocked polydimethylsiloxane A was added. The reaction was then heated at reflux for one hour, then cooled to about 35 to 40°C. and filtered. The tetrahydrofuran was stripped from the filtrate to give a black liquid containing a small amount of white solid, presumed to be the hydrochloride salt of triethylamine. The infrared analysis of the black liquid showed the following adsorptions:
3400 and 3300 cm⁻¹ NH₂ asymmetric and symmetric stretching.
3000 and 2960 cm⁻¹ Aromatic C-H stretch
1620 and 1500 cm⁻¹ Aromatic C=C stretch
1250 cm⁻¹ Si-CH₃
1100-1000 cm⁻¹ SiOSi
930 and 800 cm⁻¹ Unassigned
The resulting p-aminophenoxy endblocked polydimethylsiloxane (p-aminophenoxy polymer A) had an amine equivalent of 482 and an average of 10.1 dimethylsiloxane units per molecule. The resulting m-aminophenoxy endblocked polydimethylsiloxane (m-aminophenoxy polymer B) had an amine equivalent of 476 and an average of 9.9 dimethylsiloxane units per molecule.

An aminophenoxy endblocked polydimethylsiloxane was prepared as described above except 14.3 g. (0.131 mole) of p-aminophenol and 100 g. of chlorine endblocked polydimethylsiloxane C (0.131 equivalent, 765 chlorine equivalent) was used. The resulting p-aminophenoxy polydimethylsiloxane (p-aminophenoxy polymer B) had an amine equivalent of 840 and an average of 19.8 dimethylsiloxane units per molecule.

Para-(N-methylamino)phenoxy endblocked polydimethylsiloxane is prepared by using the above procedure except that in place of the p-aminophenol, p-(N-methylamino)phenol is used.

An acrylamidophenoxy endblocked polydimethylsiloxane (C) was prepared as follows:
In a flask equipped with an addition funnel, acrylyl chloride, triethylamine and tetrahydrofuran are added to the flask. Para-(N-methylamino)phenoxy endblocked polydimethylsiloxane is dripped into the mixture in the flask. The amount of the chloride exceeds the amount of amino bonded hydrogen on the p-(N-methylamino)phenoxy group. The by-produced hydrochloride salt of triethylamine is removed by filtration and the tetrahydro-furan is removed by evaporation. The resulting polymer has the formula 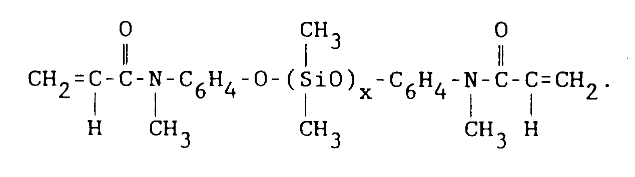
When this polymer is combined with a photoinitiator and the mixture is exposed to ultraviolet radiation, it cures.

### Example 2

Into a 2-liter, 3-necked flask equipped with an addition funnel, air stirrer and nitrogen blanket, 54.5 g. (0.5 mole) of p-aminophenol, 303 g. (3.0 mole) of triethylamine and 500 ml of tetrahydrofuran were placed. 54.3 g. (0.5 mole) of trimethylchlorosilane was added dropwise over a 30 minute period. A large amount of salt formed and additional tetrahydrofuran was added until the mixture could again be stirred. After all the trimethylchlorosilane was added to the mixture, it was filtered under a nitrogen pressure. The filtrate was put back into the reaction flask and 54.3 g. (0.6 mole) of acrylylchloride was added dropwise. The temperature exothermed to 40°C. The mixture was filtered and the tetrahydrofuran was removed under vacuum to a maximum temperature of 45°C. The resulting product was a brown, viscous liquid. Infrared analysis showed absorptions at 1660 and 1600 cm⁻¹ attributed to the amide I and II absorptions of the -NH-C(O)-CH=CH₂ group. There was also a strong absorption at 1250 cm⁻¹ from the trimethylsiloxy group. The resulting product had a formula

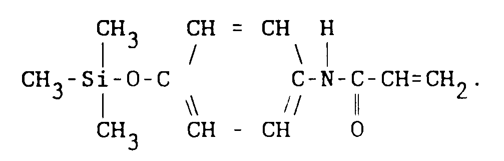

10 g. of the resulting product was mixed with 0.3 g. of 2,2-azobis-(2-methylpropionitrile) and heated in a steam press for one hour at 90°C. A reddish-yellow brittle solid was obtained.

10 g. of the resulting product was mixed with 0.5 g. of 2-hydroxy-2-methylphenylpropanone. The liquid was coated on an aluminum panel and exposed to 373 mJ/cm² of ultraviolet radiation generated from a medium pressure mercury lamp. A shiny, hard cured film was obtained.

### Example 3

A 2-liter, three-necked flask equipped with an air stirrer, nitrogen blanket and addition funnel was charged with 27.2 g. (0.25 mole) of p-aminophenol, 202 g. (2.0 moles) of triethylamine and 250 ml of tetrahydrofuran. 98.0 g. (0.25 equivalent, 392 chlorine equivalent weight) of chlorine endblocked polydimethylsiloxane A in 150 ml of tetrahydrofuran was added dropwise to the flask mixture. After all the siloxane was added, the mixture was stirred for one hour, then 27.1 g. (0.3 mole) of acrylylchloride was added dropwise. The temperature exothermed to 42°C. The mixture was stirred for 30 minutes, filtered and the tetrahydrofuran was removed under vacuum to a maximum temperature of 40°C. The resulting product was a dark brown liquid. Infrared analysis of the resulting product showed absorptions at 1660 and 1600 cm⁻¹ attributed to the amide I and II absorptions of the -NH-C(O)-CH=CH₂ group. There was also a strong absorption at 1250 cm⁻¹ from the dimethylsiloxane groups. The resulting polydimethylsiloxane had a formula 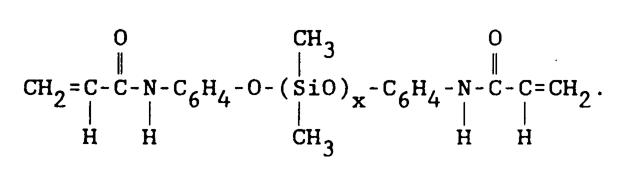
in which x had an average value of 9.6.

10 g. of the resulting product was mixed with 0.3 g. of 2,2-azobis-(2-methylpropionitrile) and heated in a steam press for one hour at 90°C. A reddish-yellow, brittle elastomeric solid was obtained.

10 g. of the resulting product was mixed with 0.5 g. of 2-hydroxy-2-methylphenylpropanone. The resulting liquid was coated on an aluminum panel and exposed to 373 mJ/cm² of ultraviolet radiation generated from a medium pressure lamp. A weak, cured elastomeric film was obtained.

## Claims

1. An acrylamidoaryloxy or methacrylamidoaryloxy functional silicon compound comprising at least one acrylamidoaryloxy group or methacrylamidoaryloxy group bonded to at least one silicon atom and any remaining groups attached to the silicon atoms of the compound being selected from the group consisting of monovalent hydrocarbon radical, halogenated monovalent hydrocarbon radical and divalent oxygen bonding at least two silicon atoms together.

2. The silicon compound according to claim 1 which has the following formula

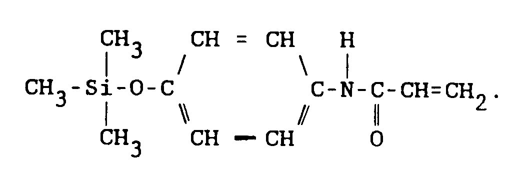

3. The silicon compound according to claim 1 which is an acrylamidoaryloxy or methacrylamidoaryloxy functional siloxane polymer comprising at least two acrylamidoaryloxy groups or methacrylamidoaryloxy groups bonded to silicon atoms of a siloxane polymer and any remaining groups attached to the silicon atoms of the siloxane polymer being selected from the group consisting of monovalent hydrocarbon radical, halogenated monovalent hydrocarbon radical and divalent oxygen atoms bonding at least two silicon atoms together.

4. The acrylamidoaryloxy or methacrylamidoaryloxy functional siloxane polymer according to claim 3 in which the acrylamidoaryloxy group or the methacrylamidoaryloxy group has the following formula 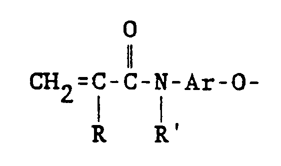 in which Ar is 1,3-phenyl or 1,4-phenyl, R is an hydrogen atom or methyl and R' is an hydrogen atom or alkyl radical.

5. The acrylamidoaryloxy functional siloxane polymer according to claim 4 which has the following formula 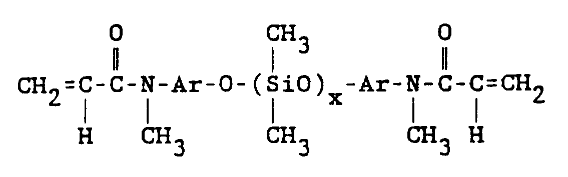 in which x has a value of from 5 to 50.

6. A method of making an acrylamidoaryloxy or methacrylamidoaryloxy functional silicon compound according to claim 1, which comprises
reacting in the presence of an organic solvent, a silicon compound having at least one silicon bonded hydrolyzable group, -X selected from chlorine, dimethylamino, acetoxy, methoxy and ethoxy, which is reactable with phenol hydroxyl groups to provide a compound HX with a boiling point less than aminophenol and an aminophenol, when the hydrolyzable group is chlorine or acetoxy there is also present a tertiary amine, to produce an aminoaryloxy functional silicon compound solution,
mixing the aminoaryloxy functional silicon compound in an organic solvent with a tertiary amine and a chloride selected from the group consisting of acrylyl chloride and methacrylyl chloride where the chloride is present in an amount equivalent to at least the amount of amino hydrogen,
removing by-produced hydrochloride salt of tertiary amine to produce a solution of the acrylamidoaryloxy or methacrylamidoaryloxy functional silicon compound in an organic solvent.

7. The method in accordance with claim 6 further comprising removing by-produced HX from aminoaryloxy functional silicon compound solution before mixing it with the chloride.

8. The method in accordance with claim 6 further comprising evaporating the organic solvent from the produced (meth)acrylamidoaryloxy functional silicon compound.

9. The method in accordance with claim 8 further comprising removing by-produced HX from aminoaryloxy functional silicon compound solution before mixing it with the chloride.

10. The method in accordance with claim 6 in which the silicon compound having at least one hydrolyzable group is trimethylchlorosilane.

11. The method in accordance with claim 6 in which the silicon compound having at least one hydrolyzable group is an organosiloxane.

12. The method in accordance with claim 11 in which the organosiloxane has the general formula 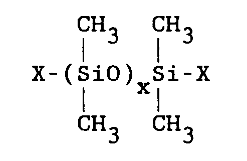 in which X is chlorine atom and x has a value of from 5 to 50, the tertiary amine has a formula R''₃N where R'' is an alkyl radical and the acryl chloride is acrylyl chloride.

## Patentansprüche

1. Acrylamidoaryloxy- oder Methacrylamidoaryloxy-funktionale Siliciumverbindungen, enthaltend mindestens einen an mindestens ein Siliciumatom gebundenen Acrylamidoaryloxy- oder Methacrylamidoaryloxy-Rest, wobei die weiteren an die Siliciumatome der Verbindung gebundene Reste ausgewählt sind aus der Gruppe, bestehend aus einwertigen Kohlenwasserstoffresten, halogenierten einwertigen Kohlenwasserstoffresten und zweiwertigem, mindestens zwei Siliciumatome verbindendem Sauerstoff.

2. Siliciumverbindung nach Anspruch 1 mit der folgenden Formel :

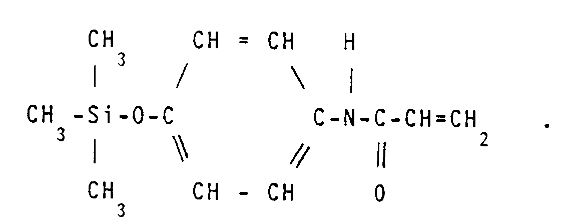

3. Siliciumverbindungen nach Anspruch 1, die Acrylamidoaryloxy- oder Methacrylamidoaryloxy-funktionale Siloxanpolymere sind, enthaltend mindestens zwei an Siliciumatome eines Siloxanpolymeren gebundene Acrylamidoaryloxy-Reste oder Methacrylamidoaryloxy-Reste, wobei die weiteren an die Siliciumatome des Siloxanpolymeren gebundenen Reste ausgewählt sind aus der Gruppe, bestehend aus einwertigen Kohlenwasserstoffresten, halogenierten einwertigen Kohlenwasserstoffresten und zweiwertigem, mindestens zwei Siliciumatome verbindendem Sauerstoff.

4. Acrylamidoaryloxy- oder Methacrylamidoaryloxy-funktionnale Siloxanpolymere nach Anspruch 3, wobei der Acrylamidoaryloxy-Rest oder der Methacrylamidoaryloxy-Rest die folgende Formel 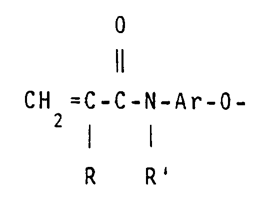 besitzt, in der Ar einen 1,3-Phenylen- oder 1,4-Phenylenrest bezeichnet, R ein Wasserstoffatom oder Methyl bedeutet und R' für ein Wasserstoffatom oder einen Alkylrest steht.

5. Acrylamidoaryloxy-funktionale Siloxanpolymere nach Anspruch 4, die der folgenden Formel 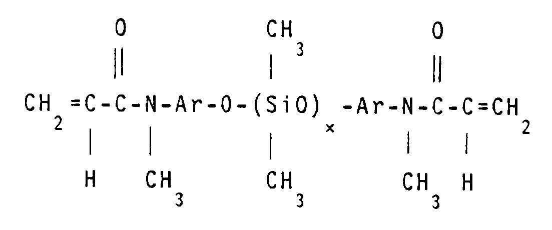 entsprechen, in der x einen Wert von 5 bis 50 besitzt.

6. Verfahren zur Herstellung von Acrylamidoaryloxy- oder Methacrylamidoaryloxy-funktionalen Siliciumverbindungen nach Anspruch 1, bei dem man
in Gegenwart eines organischen Lösungsmittels eine Siliciumverbindung mit einem hydrolysierbaren Rest -X, ausgewählt aus Chlor, Dimethylamino, Acetoxy, Methoxy und Ethoxy, der mit phenolischen Hydroxylgruppen unter Bildung einer Verbindung HX mit einem niedrigeren Siedepunkt als Aminophenol umsetzbar ist, mit einem Aminophenol zu einer Lösung einer Aminoaryloxy-funktionalen Siliciumverbindung umsetzt, wobei ebenfalls ein tertiäres Amin zugegen ist, sofern der hydrolysierbare Rest Chlor oder Acetoxy ist,
die Aminoaryloxy-funktionale Siliciumverbindung in einem organischen Lösungsmittel mit einem tertiären Amin und einem Chlorid mischt, ausgewählt aus der Gruppe, bestehend aus Acrylchlorid und Methacrylchlorid, wobei das Chlorid in einer Menge zugegen ist, die mindestens der Menge der Amino-Wasserstoffatome äquivalent ist,
das als Nebenprodukt entstehende Hydrochlorid-Salz des tertiären Amins entfernt, um eine Lösung der Acrylamidoaryloxy- oder Methacrylamidoaryloxy-funktionalen Siliciumverbindung in einem organischen Lösungsmittel zu erhalten.

7. Verfahren nach Anspruch 6, wobei man weiterhin die als Nebenprodukt entstehende Verbindung HX aus der Lösung der Aminoaryloxy-funktionalen Siliciumverbindung abtrennt, bevor man sie mit dem Chlorid mischt.

8. Verfahren nach Anspruch 6, wobei man weiterhin das organische Lösungsmittel von der hergestellten (Meth)acrylamidoaryloxy-funktionalen Siliciumverbindung durch Verdampfen abtrennt.

9. Verfahren nach Anspruch 8, wobei man weiterhin das als Nebenprodukt entstandene HX von der Lösung der Aminoaryloxy-funktionalen Siliciumverbindung abtrennt, bevor man sie mit dem Chlorid mischt.

10. Verfahren nach Anspruch 6, wobei die Siliciumverbindung mit mindestens einem hydrolysierbaren Rest Trimethylchlorsilan ist.

11. Verfahren nach Anspruch 6, wobei die Siliciumverbindung mit mindestens einem hydrolysierbaren Rest ein Organosiloxan ist.

12. Verfahren nach Anspruch 11, wobei das Organosiloxan der allgemeinen Formel 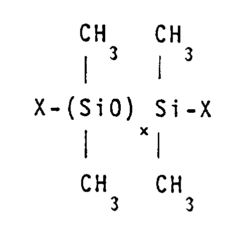 entspricht, in der X ein Chloratom bezeichnet und x einen Wert von 5 bis 50 besitzt, das tertiäre Amin der Formel R''₃N entspricht, in der R'' einen Alkylrest bedeutet, und das Acrylchlorid Acrylsäurechlorid ist.

## Revendications

1. Composé du silicium à fonction acrylamidoaryloxy ou méthacrylamidoaryloxy , comprenant au moins un groupe acrylamidoaryloxy ou groupe méthacrylamidoaryloxy lié à au moins un atome de silicium, et tous les groupes restants attachés aux atomes de silicium du composé étant choisis dans le groupe constitué d'un radical hydrocarboné monovalent, d'un radical hydrocarboné monovalent halogéné et d'un atome d'oxygène divalent liant au moins deux atomes de silicium ensemble.

2. Composé du silicium selon la revendication 1, qui a la formule suivante

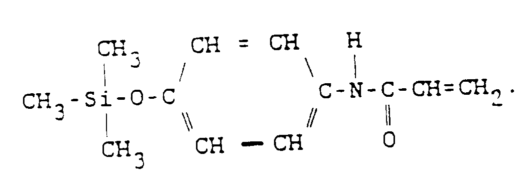

3. Composé du silicium selon la revendication 1, qui est un polymère de siloxane à fonctions acrylamidoaryloxy ou méthacrylamidoaryloxy comprenant au moins deux groupes acrylamidoaryloxy ou groupes méthacrylamidoaryloxy liés à des atomes de silicium d'un polymère de siloxane, et tous les groupes restants attachés aux atomes de silicium du polymère de siloxane étant choisis dans le groupe constitué d'un radical hydrocarboné monovalent, d'un radical hydrocarboné monovalent halogéné et des atomes d'oxygène divalents liant au moins deux atomes de silicium ensemble.

4. Polymère de siloxane à fonctions acrylamidoaryloxy ou méthacrylamidoaryloxy selon la revendication 3, dans lequel le groupe acrylamidoaryloxy ou le groupe méthacrylamidoaryloxy a la formule suivante 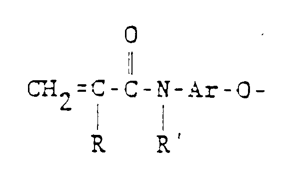 où Ar est un radical 1,3-phényle ou 1,4-phényle, R est un atome d'hydrogène ou un radical méthyle et R' est un atome d'hydrogène ou un radical alkyle.

5. Polymère de siloxane à fonctions acrylamidoaryloxy selon la revendication 4, qui a la formule suivante 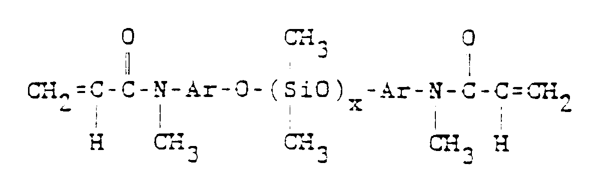 où x a une valeur de 5 à 50.

6. Procédé de fabrication d'un composé du silicium à fonction acrylamidoaryloxy ou méthacrylamidoaryloxy selon la revendication 1, qui comprend
la réaction, en présence d'un solvant organique, d'un composé du silicium ayant au moins un groupe hydrolysable lié à du silicium, -X, choisi parmi le chlore, un groupe diméthylamino, acétoxy, méthoxy et éthoxy, qui peut réagir avec des groupes hydroxyles du phénol pour fournir un composé HX avec un point d'ébullition inférieur à celui de l'aminophénol, et d'un aminophénol, lorsque le groupe hydrolysable est du chlore ou un groupe acétoxy, une amine tertiaire est aussi présente, pour produire une solution de composé du silicium à fonction aminoaryloxy,
le mélange du composé du silicium à fonction aminoaryloxy dans un solvant organique avec une amine tertiaire et un chlorure choisi dans le groupe constitué du chlorure d'acrylyle et du chlorure de méthacrylyle, où le chlorure est présent en une quantité équivalant à au moins la quantité d'hydrogène de groupes amino,
l'élimination du sel chlorhydrate sous-produit de l'amine tertiaire pour produire une solution du composé du silicium à fonction acrylamidoaryloxy ou méthacrylamidoaryloxy dans un solvant organique.

7. Procédé selon a revendication 6, comprenant en outre l'élimination du HX sous-produit de la solution de composé du silicium à fonction aminoaryloxy avant de la mélanger avec le chlorure.

8. Procédé selon la revendication 6, comprenant en outre l'évaporation du solvant organique du composé du silicium à fonction (méth)acrylamidoaryloxy produit.

9. Procédé selon la revendication 8, comprenant en outre l'élimination du HX sous-produit de la solution de composé du silicium à fonction aminoaryloxy avant de la mélanger avec le chlorure.

10. Procédé selon la revendication 6, dans lequel le composé du silicium ayant au moins un groupe hydrolysable est le triméthylchlorosilane.

11. Procédé selon la revendication 6, dans lequel le composé du silicium ayant au moins un groupe hydrolysable est un organosiloxane.

12. Procédé selon la revendication 11, dans lequel l'organosiloxane a la formule générale 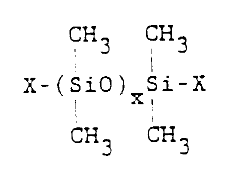 où X est un atome de chlore et x a une valeur de 5 à 50, l'amine tertiaire a une formule R''₃N où R'' est un radical alkyle et le chlorure d'acryle est du chlorure d'acrylyle.
